## Europäisches Patentamt

## European Patent Office

## Office européen des brevets

(19)

(11) Numéro de publication: **0 064 008**
**B1**

(12) **FASCICULE DE BREVET EUROPEEN**

(45) Date de publication du fascicule du brevet:
**14.08.85**

(51) Int. Cl.⁴: **G 21 C 17/10**

(21) Numéro de dépôt: **82400726.4**

(22) Date de dépôt: **22.04.82**

(54) Appareil de mesure locale de puissance dans un réacteur nucléaire.

(30) Priorité: **24.04.81 US 256992**

(43) Date de publication de la demande:
**03.11.82 Bulletin 82/44**

(45) Mention de la délivrance du brevet:
**14.08.85 Bulletin 85/33**

(84) Etats contractants désignés:
**BE DE FR GB IT SE**

(56) Documents cités:
**EP - A - 0 008 684**
**FR - A - 1 406 368**
**GB - A - 2 018 421**
**US - A - 3 444 373**

(73) Titulaire: **ELECTRICITE DE FRANCE Service National, 2, rue Louis Murat, F-75008 Paris (FR)**

(72) Inventeur: **Rolstad, Erik, Midstuveien, N-2 1750 Halden (NO)**

(74) Mandataire: **Fort, Jacques et al, CABINET PLASSERAUD 84, rue d'Amsterdam, F-75009 Paris (FR)**

## Description

L'invention concerne les appareils de mesure de la puissance locale dans les réacteurs nucléaires du type défini par le préambule de la revendication 1; de tels appareils, décrits dans la demande de brevet FR-A-2420827, sont fréquemment appelés «thermomètres gamma». Les deux détecteurs, généralement constitués par les jonctions d'un thermocouple, disposés à deux emplacements écartés l'un de l'autre dans le sens axial et situés dans des régions adjacentes chaude et froide de chaque zone de mesure, fournissent un signal à partie duquel on déduit une mesure de flux ou débit thermique qui reflète la génération de puissance locale dans le réacteur nucléaire.

Un premier type de thermomètre gamma, dit à flux thermique axial, comporte une région chaude placée au centre de la région chaude de la zone, à mi-chemin entre les régions adjacentes froides. On suppose dans un tel thermomètre gamma qu'un gradient de température symétrique s'établit dans la zone de mesure, la température maximale se trouvant à l'emplacement de la jonction chaude. Mais il peut se produire un écoulement thermique asymétrique dans la région chaude qui se traduit par une répartition de température asymétrique et un décalage du point de température maximale dans le sens axial, d'où un écart à partir de l'emplacement de la jonction chaude et une différence de température entre les régions froides qui encadrent la région chaude. Le signal de différence de température produit par les deux jonctions du thermocouple est alors affecté par une erreur qui nuit à la précision de la mesure de débit thermique.

Le signal fourni par la disposition connue n'est satisfaisant que s'il y a une dissipation thermique importante sous l'action des gamma. Une telle dissipation importante est donc indispensable pour obtenir un rapport signal/bruit satisfaisant. Dans ceux des thermomètres gamma qui utilisent un flux radial de chaleur (ce qui est notamment le cas des thermomètres gamma utilisés dans les réacteurs à eau bouillante), il peut se poser un problème de niveau de signal. Jusqu'à présent, on a utilisé des chambres à gaz et des ensembles à plusieurs composants afin d'arriver à un gain suffisant.

Les thermomètres gamma utilisés jusqu'ici présentent un problème supplémentaire, constitué par le temps de réponse du signal au changement de flux thermique. Ce problème est particulièrement aigu dans les réacteurs à eau bouillante où le niveau de signal doit être suffisamment élevé pour déclencher les circuits de sécurité. On peut diminuer la constante de temps de réponse en diminuant la masse du corps conducteur de la chaleur dans la zone de mesure. Mais une telle réduction de masse diminue l'intensité du signal comparé au bruit et ce compromis est donc peu satisfaisant.

L'invention vise à fournir un appareil de mesure de flux thermique comportant un dispositif détecteur répondant mieux que ceux antérieurement connus aux exigences de la pratique, notamment en ce qu'il permet d'écarter les problèmes de niveau de signal, de temps de réponse du signal au changement de débit thermique et de répartition asymétrique de l'écoulement de chaleur.

On connaît également (EP-A-8684) un crayon de combustible nucléaire présentant une succession de régions fissiles, conductrices et isolantes où sont placées des jonctions de thermocouples constituant une chaîne. L'arrangement décrit vise à résoudre un problème très différent de celui envisagé ici, consistant à éviter des perturbations dues à des courants parasites, et ne pourrait conduire au même résultat.

Ce résultat est atteint grâce à la disposition suivant la partie caractérisante de la revendication 1.

Il est important de noter que les problèmes résolus par l'invention sont particuliers au cas des appareils ayant un corps conducteur de la chaleur dans lesquels on doit mesurer un flux thermique, et que la solution proposée s'appuie sur le fait que l'une des régions est encadrée par l'autre. Il s'agit donc là d'une solution qui n'a rien à voir avec une simple duplication de moyens connus.

On voit que l'utilisation de plusieurs couples reliés en série fournit un signal résultant accru.

Dans un appareil où l'écoulement thermique est axial, les deux éléments chauds (jonctions chaudes en cas de thermocouple) seront placés au même niveau dans la région chaude de la zone de mesure et seront à égale distance des deux parties de la région adjacente froide. Une jonction froide unique sera placée dans chacune des deux parties de la région froide. La région chaude pourra être délimitée par une partie de diamètre réduit du corps conducteur, constituant un espace à résistance thermique élevée dans la zone de mesure.

Dans un autre mode de réalisation, on peut prévoir deux portions de diamètre réduit adjacentes du corps.

Dans un autre mode de réalisation encore, on accroît le niveau de signal en disposant un câble unique ayant une pluralité de couples thermoélectriques à jonctions en série de façon à constituer des boucles qui traversent une région chaude commune d'une zone de mesure. Les jonctions d'extrémité des boucles sont placées dans les deux parties de la région froide.

On arrive ainsi à accroître le niveau de signal et à éliminer pratiquement les erreurs dues à une répartition asymétrique de l'écoulement thermique dans les appareils à flux axial. On peut également réduire la masse du corps dans la zone de mesure, notamment par diminution de la longueur axiale de la région à résistance thermique accrue dans le corps, tout en conservant un rapport signal/bruit suffisant.

L'invention est également utilisable dans les appareils du type à flux thermique radial, dans lesquels on augmente le niveau de signal sans accroissement corrélatif de la masse du corps et donc de la constante de temps de réponse.

L'invention sera mieux comprise à la lecture de la description qui suit d'appareils qui en constituent des modes particuliers de réalisation donnés à titre d'exemples non limitatifs. La description se réfère aux dessins qui l'accompagnent, dans lesquels:

– la figure 1 est un schéma en coupe suivant l'axe d'un appareil constituant un mode de réalisation à écoulement axial de chaleur suivant l'invention;

– la figure 2 est une représentation graphique du gradient de température dans l'appareil montré en figure 1;

– la figure 3 montre schématiquement un autre mode de réalisation;

– la figure 4 est une vue en élévation d'un autre mode de réalisation encore;

– la figure 5 est une vue en coupe simplifiée montrant la disposition des thermocouples dans le mode de réalisation de la figure 4;

– la figure 6 est une vue partielle, en coupe suivant l'axe, d'un appareil constituant un mode de réalisation à écoulement radial de chaleur;

– la figure 7 est une représentation graphique du gradient de température dans l'appareil de la figure 6;

– la figure 8 est un graphique comparant les réponses des divers modes de réalisation.

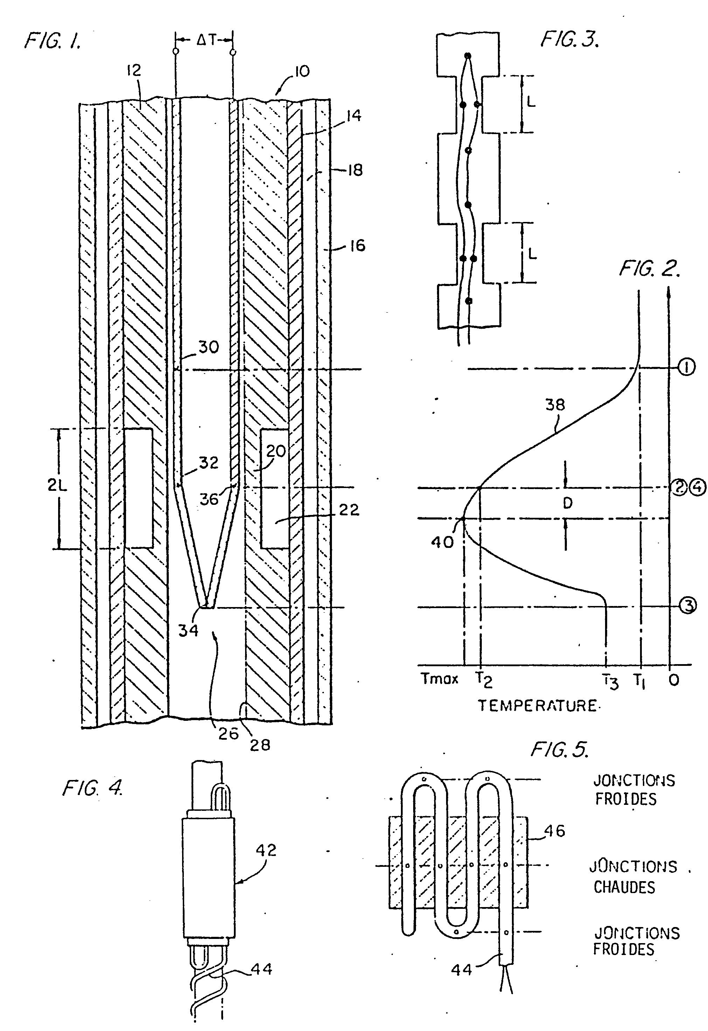

L'appareil de mesure montré en figure 1, désigné dans son ensemble par la référence 10, est du type à écoulement axial de chaleur décrit dans la demande FR 2420827 déjà mentionnée. Dans cet appareil, utilisable dans un réacteur à eau sous pression, un corps cylindrique allongé 12 est constitué de matériau absorbant le rayonnement gamma, par exemple l'acier inoxydable, et il est enfermé dans une chemise tubulaire constituant puits de chaleur 14 qui est refroidie par circulation d'eau à l'intérieur d'un tube guide 16. La chaleur dissipée dans le corps 12 à la suite de l'absorption du rayonnement gamma produit un écoulement de chaleur qui est radial sauf dans une région à écoulement axial, délimitée par une portion 20 de diamètre réduit du corps. Plusieurs portions 20 peuvent être prévues. Chacune forme un espace 22 de résistance thermique élevée à l'intérieur de la chemise 14, ce qui se traduit par une déviation de l'écoulement thermique ainsi que par une résistance électrique du corps allongé 12. En mesurant la différence de température interne du corps entre un emplacement dans la portion 22 et un emplacement hors de cette portion, mais adjacent à l'espace 22, on peut déterminer le flux thermique, qui est représentatif de la génération locale de puissance dans la zone de mesure où est situé l'espace 22. La différence de température est mesurée à l'aide d'un dispositif sensible à la différence de température, désigné dans son ensemble par la référence 26, placé dans un trou central 28 ménagé dans le corps 12.

Dans un mode particulier de réalisation de l'invention, le dispositif sensible à la différence de température 26 est un thermocouple à jonctions multiples, dont les jonctions produisant un signal électrique, ménagées entre des métaux différents (chromel et alumel par exemple) sont placées dans chaque zone de mesure. La zone de mesure comporte une région chaude qui correspond sensiblement à l'espace 22 de longueur axiale déterminée 2L et deux régions froides, une de chaque côté de la région chaude. Les quatre jonctions de thermocouples associées à chaque zone de mesure sont reliées en série et consistent en une première jonction 30 placée, dans le sens axial, d'un côté d'une seconde jonction 32 qui est à mi-longueur de la portion 20. La troisième jonction 34 au bout du dispositif à thermocouple est située de l'autre côté de la jonction 32. La distance des jonctions 34 et 32 dans le sens axial est égale à la distance entre les jonctions 30 et 32. La quatrième jonction 36 est au même niveau axial que la seconde jonction 32. Ainsi, les jonctions 32 et 36 sont des jonctions chaudes correspondant à la même région chaude de la zone de mesure, tandis que les jonctions 30 et 34 sont des jonctions froides qui sont soumises à la température du corps 12 dans des régions froides de la zone de mesure des deux côtés de l'espace 22, dans le sens axial.

L'écoulement thermique vers le puits de chaleur au droit des jonctions de thermocouple est souvent perturbé par un écoulement axial asymétrique à travers la partie 20 du corps 12, par exemple par suite d'un contact thermique irrégulier ou intermittent dans le jeu 18, provoqué par exemple par des dépôts de corps étrangers. Une telle répartition asymétrique d'écoulement thermique dans la zone de mesure se traduit par un gradient de température dissymétrique, comme le montre la courbe 38 sur la figure 2. On voit que la température maximale Tmax est atteinte au point 40 qui est décalé d'une distance D par rapport à la disposition, pour le reste symétrique, des jonctions chaudes 32 et 36.

Lorsqu'on utilise un seul thermocouple différentiel, seule la température de jonction chaude $T_2$ et une température de jonction froide $T_1$ sont prises en compte pour produire un signal de différence de température $\Delta Ts$. Dans des conditions d'écoulement thermique asymétrique, une erreur de signal apparaît. Elle est donné par l'équation suivante, obtenue à partir des lois de conduction thermique:

$$\Delta Ts = \frac{WL^2}{8\,K} - \frac{WADL}{2\,K}$$

Dans cette formule, W est le taux de génération thermique volumétrique, A est la section droite du corps et K est sa conductibilité thermique. L'expression

$$\frac{WADL}{2\,K}$$

représente l'erreur sur le signal.

Au contraire, lorsque l'on utilise le dispositif à thermocouple double 26 de l'invention, qui est sensible aux températures $T_1$ et $T_3$ du fait des jonctions froides 30 et 34 des deux côtés de la jonction chaude, on obtient un signal de différence de température $\Delta T$ qui est le suivant, du fait du montage en série des jonctions:

$$\Delta T = (T2-T1) + (T2-T3) = \left( \frac{WL^2}{8\,K} + \frac{WADL}{2\,K} \right) + \left( \frac{WL^2}{2\,K} - \frac{WADL}{2\,K} \right)$$

ou:

$$\Delta T = 2 \left( \frac{WL^2}{8\,K} \right) = 2\,\Delta Ts \;(\text{idéal})$$

On voit que le dispositif à double thermocouple différentiel de l'invention fournit un signal de différence de température qui est le double de l'intensité du signal pour un dispositif à un seul thermocouple différentiel. De plus, l'erreur sur le signal

$$\frac{WADL}{2\,K}$$

disparaît de sorte que:

$$\Delta T = \frac{WL^2}{4\,K}$$

On voit qu'on peut déterminer de façon précise le flux de chaleur W à partir du signal de différence de température $\Delta T$ qu'il y ait ou non symétrie dans l'écoulement thermique.

Les changements dans le signal de différence de température présentent un retard sur les changements de puissance, le temps de réponse thermique $t$ étant fonction d'une constante de temps thermique $\tau$, comme l'indique l'équation suivante:

$$\Phi = \Phi_0 \exp(-t/\tau)$$

où $\Phi$ est la variation de $\Delta T$.

L'inventeur a constaté que la constante de temps de réponse $\tau$ est une fonction croissante de la masse du corps 12 dans la zone de mesure ou de la longueur axiale de l'espace 22, c'est-à-dire 2L. Cette relation entre la longueur axiale de l'espace et la constante de temps de réponse thermique permet de réaliser un appareil ayant une réponse thermique rapide en réduisant la longueur axiale de la portion de diamètre réduit, tout en conservant un niveau de signal suffisant par rapport au niveau de bruit pour permettre la mesure du flux thermique.

La figure 3 montre schématiquement un mode de réalisation dans lequel on amplifie les avantages de l'invention en reliant en série les jonctions de thermocouples associés à deux portions adjacentes de diamètre réduit du corps 12 pour une même zone de mesure. Chaque portion de diamètre réduit présente une longueur qui est la moitié de celle de la portion 20 de l'appareil 10 de la figure 1. Le tableau ci-dessous compare diverses dispositions évoquées plus haut en ce qui concerne les relations entre le temps de réponse, la longueur de l'espace 22 et le signal.

| Type de thermo-couple | 2L: lon-gueur to-tale de l'espace (mm) | $\Phi$: varia-tion du signal (°C) | t: temps de ré-ponse (s) |
|---|---|---|---|
| Montage différentiel simple | 8 | 7½ | 2½ |
| Montage différentiel double (fig. 1) | 8 | 15 | 2½ |
| 2 montages différen-tiels en série (fig. 3) | 8 (4+4) | 7½ | ¾ |

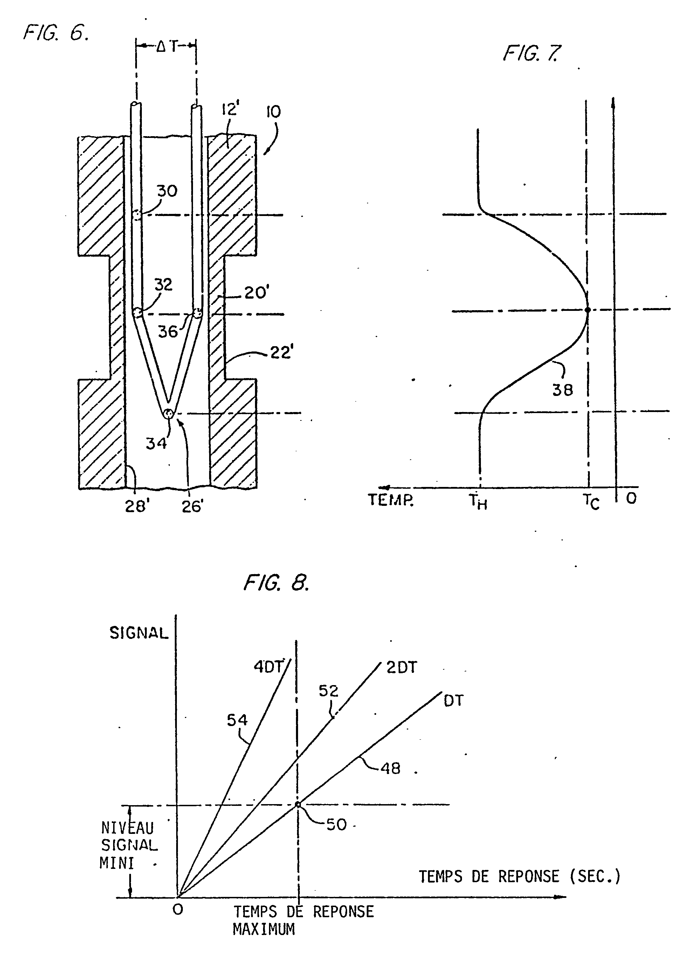

La figure 4 montre un autre type de thermomètre gamma auquel on peut appliquer le perfectionnement apporté par la présente invention, grâce à l'emploi d'un dispositif à thermocouple ayant des jonctions connectées en série incorporées dans un câble unique 44. Comme le montre la figure 5, le câble 44 s'étend à travers un corps conducteur de la chaleur 46 du dispositif constituant une région chaude de la zone de mesure. Quatre boucles espacées du câble contiennent quatre jonctions chaudes et sont noyées dans le corps 46 tandis que les jonctions froides aux extrémités des boucles sont placées dans des régions froides de la zone de mesure. On obtient les mêmes avantages que ci-dessus, c'est-à-dire l'élimination d'erreurs sur le signal dues à un écoulement thermique asymétrique et l'accroissement du niveau de signal.

La figure 6 montre un thermomètre gamma du type à écoulement de chaleur radial. Dans ce thermomètre gamma 10', le corps 12' constituant corps chauffant est exposé au réfrigérant par toute sa surface extérieure, ce qui se traduit par une température uniforme de puits de chaleur. En conséquence, la région froide de la zone de mesure correspond à la portion de diamètre réduit 20', tandis que des régions chaudes apparaissent des deux côtés de la région froide dans le sens axial, comme le montre la courbe de répartition de température 38' sur la figure 7. Un dispositif à thermocouple 26' similaire à celui représenté en figure 1 pour l'appareil de mesure 10 est utilisé pour l'appareil 10'. Il est placé dans le trou central 28' du corps 12'. Le dispositif à thermocouple 26' a encore quatre jonctions de production de signal 30', 32', 34' et 36' reliées en série de façon à fournir un signal de sortie égal à deux fois celui qui correspondrait à un dispositif à thermocouple à deux jonctions. Il n'y a toutefois pas de correction d'erreur ici, étant donné l'absence d'un type d'écoulement thermique axial susceptible d'erreur d'asymétrie, comme dans le cas de l'appareil 10 décrit plus haut.

Mais la disposition à thermocouple différentiel multiple n'en conserve pas moins des avantages dans le cas d'un thermomètre gamma à écoulement thermique radial du genre montré en figures 6 et 7: il y a augmentation du signal de sortie sans accroissement de la masse du corps. Le signal a une réponse plus rapide pour un niveau de signal approprié. Ce résultat est particulièrement souhaitable dans le cas d'un réacteur à eau bouillante utilisant un appareil à écoulement thermique radial, dont le niveau de signal de sortie est intrinsèquement plus faible que celui d'un appareil à écoulement axial.

L'intérêt de l'invention apparaît sur la figure 8, qui donne les courbes de variation du niveau de signal en fonction du temps de réponse du signal, à flux thermique constant. La courbe 48 représente la caractéristique de signal obtenue avec un appareil à un seul thermocouple à double jonction du genre utilisé jusqu'ici comme thermomètre gamma. Le point 50 de la courbe 48 correspond au niveau minimum de signal au-dessous duquel la précision sur la mesure de puissance est telle qu'elle manque de fiabilité. Le point 50 sur la courbe 48 représente également le temps de réponse maximal au-dessus duquel la réponse est trop lente pour être compatible avec le fonctionnement du système de sécurité.

Lorsqu'on utilise une disposition du genre montré en figure 6, on obtient la courbe 52. La courbe 54 représente le signal obtenu avec un appareil comportant quatre jonctions différentielles, telles que représentées en figure 3. On voit qu'on peut choisir les domaines de signaux représentés par les courbes 52 et 54 à l'intérieur du domaine de temps de réponse acceptable, tout en restant au-dessus du niveau minimum de signal.

## Revendications

1. Appareil de mesure de la puissance locale dans un réacteur nucléaire, par mesure du flux thermique dans un corps conducteur de la chaleur (12) en matériau absorbant le rayonnement gamma présentant un axe, comprenant un dispositif détecteur de différence de température monté à l'intérieur du corps pour fournir un signal représentatif de la différence de température entre une première région et une seconde région, adjacente à la première dans le sens axial dans une zone de mesure, appareil comprenant un couple de deux détecteurs (30, 32) placés chacun dans une des régions, caractérisé en ce que, la seconde région d'étendant des deux côtés de la première, l'appareil comprend de plus un second couple de deux détecteurs (34, 36) au moins, en série avec le premier couple, dont l'un (36) est dans la première région au même niveau qu'un détecteur du premier couple et dont l'autre (34) est placé dans la partie de la seconde région à l'opposé de celle qui reçoit l'autre détecteur (30) du premier couple, symétriquement de cet autre détecteur par rapport aux détecteurs placés dans la première région.

2. Appareil suivant la revendication 1, caractérisé en ce que les deux détecteurs (32, 36) placés dans la première région sont disposés à l'emplacement d'extremum théorique de température.

3. Appareil suivant la revendication 1, caractérisé en ce que le corps conducteur (12) présente, une partie (20) de diamètre réduit correspondant à la première région (22) et destinée à créer la différence de température entre les régions.

4. Appareil suivant la revendication 1, 2 ou 3, caractérisé en ce que les détecteurs sont constitués par des jonctions chaudes et froides de thermocouples.

5. Appareil suivant l'une quelconque des revendications précédentes, caractérisé en ce que le corps conducteur de la chaleur est de forme allongée et est muni d'une chemise externe constituant surface d'évacuation thermique.

6. Appareil suivant l'une quelconque des revendications précédentes, caractérisé en ce que les détecteurs sont montés dans un trou central (28) du corps conducteur (12).

7. Appareil suivant l'une quelconque des revendications précédentes, caractérisé en ce que les éléments, tels que des jonctions de thermocouples, sont incorporés dans un câble unique (44).

8. Appareil suivant la revendication 7, caractérisé en ce que le câble (44) est replié de façon à constituer des boucles parallèles espacées, disposées dans le corps conducteur (12) et s'étendant tout le long de la zone de mesure.

## Patentansprüche

1. Vorrichtung zur Messung der örtlichen Leistung in einem Kernreaktor durch Messung des Wärmeflusses in einem wärmeleitfähigen Körper (12) aus Gammastrahlen absorbierendem Material, der eine Achse aufweist, mit einer Temperaturdifferenzdetektorvorrichtung, die im Inneren des Körpers angeordnet ist, um ein Signal zu erzeugen, das die Temperaturdifferenz zwischen einem ersten Bereich und einem zweiten Bereich darstellt, der axial in der Nähe des ersten in einer Messzone liegt, und mit einem Paar von zwei Detektoren (30, 32), die jeweils in einem der Bereiche angeordnet sind, dadurch gekennzeichnet, dass sich der zweite Bereich zu beiden Seiten des ersten erstreckt und dass die Vorrichtung ferner wenigstens ein zweites Paar von zwei Detektoren (34, 36) in Reihe mit dem ersten Paar aufweist, von denen der eine (36) in dem ersten Bereich in Höhe eines Detektors des ersten Paares und der andere (34) in demjenigen Teil des zweiten Bereiches, der gegenüber demjenigen liegt, der den anderen Detektor (30) des ersten Paares aufweist, symmetrisch zu dem anderen Detektor in bezug auf die in dem ersten Bereich liegenden Detektoren angeordnet ist.

2. Vorrichtung nach Anspruch 1, dadurch gekennzeichnet, dass die beiden Detektoren (32, 36), die in dem ersten Bereich liegen, an einer Stelle angeordnet sind, deren Temperatur den theoretischen Extremwert aufweist.

3. Vorrichtung nach Anspruch 1, dadurch gekennzeichnet, dass der wärmeleitfähige Körper (12) einen im Durchmesser verringerten Teil (20) aufweist, der dem ersten Bereich (22) entspricht und zur Erzeugung der Temperaturdifferenz zwischen den Bereichen bestimmt ist.

4. Vorrichtung nach Anspruch 1, 2 oder 3, dadurch gekennzeichnet, dass die Detektoren durch warme und kalte Thermoelement-Verbindungsstellen gebildet sind.

5. Vorrichtung nach einem der vorstehenden Ansprüche, dadurch gekennzeichnet, dass der wärmeleitfähige Körper eine langgestreckte Form aufweist und mit einer äusseren Hülle versehen ist, die eine Wärmeabführfläche bildet.

6. Vorrichtung nach einem der vorstehenden Ansprüche, dadurch gekennzeichnet, dass die Detektoren in einem mittleren Loch (28) des wärmeleitfähigen Körpers (12) angeordnet sind.

7. Vorrichtung nach einem der vorstehenden Ansprüche, dadurch gekennzeichnet, dass die Bauteile, wie die Thermoelement-Verbindungsstellen, in einem einzigen Kabel (44) ausgebildet sind.

8. Vorrichtung nach Anspruch 7, dadurch gekennzeichnet, dass das Kabel derart gefaltet ist, dass es parallele getrennte Schleifen bildet, die in dem wärmeleitfähigen Körper (12) angeordnet sind und sich über die gesamte Länge der Messzone erstrecken.

**Claims**

1. Measuring apparatus for measuring the local power in a nuclear reactor by measuring the heat flow in a heat conductive body (12) made of gamma radiation absorbing material having an axis, comprising a device for sensing a temperature difference, located within the body for delivering a signal which is representative of the differential temperature between a first region and a second region which is axially adjacent to the first region in a measurement zone, said apparatus having a couple of two detectors (30, 32) each located in one of the regions, characterized in that, while the second region extends on both sides of the first region, the apparatus further comprises a second couple of two detectors (34, 36) at least, located in series relation with the first couple, wherein one (36) of the two detectors is in the first region at the same axial level as a detector of the first couple and the second (34) is located in that part of said second region which is opposed to that region which receives the other detector (30) of the first couple, symmetrically to that other detector with respect to the detectors located in the first region.

2. Apparatus according to claim 1, characterized in that the two detectors (32, 36) located in the first region are located at the location of the temperature theoretical extremum.

3. Apparatus according to claim 1, characterized in that the conductive body (12) is provided with a reduced diameter portion (20) coextensive with said first region (22) for generating the differential temperature between the regions.

4. Apparatus according to claim 1, 2 or 3, characterized in that the detectors are hot and cold thermocouple junctions.

5. Apparatus according to any one of the preceding claims, characterized in that the heat conductive body is of elongated shape and is provided with an outer jacket constituting a heat removal surface.

6. Apparatus according to any one of the preceding claims, characterized in that the detectors are located in a central bore (28) of the conductive body (12).

7. Apparatus according to any one of the preceding claims, characterized in that the elements, such as thermocouple junctions, are enclosed in a single cable (44).

8. Apparatus according to claim 7, characterized in that the cable (44) is folded for forming parallel spaced loops positioned within the conductive body (12) and extending throughout the measurement zone.

0064008

FIG. 1.

FIG. 3.

FIG. 2.

TEMPERATURE

FIG. 4.

FIG. 5.

JONCTIONS FROIDES

JONCTIONS CHAUDES

JONCTIONS FROIDES

7

FIG. 6.

FIG. 7

FIG. 8.

SIGNAL

4DT    2DT

54    52    DT

48

NIVEAU
SIGNAL    50
MINI

TEMPS DE REPONSE (SEC.)

O    TEMPS DE REPONSE
MAXIMUM